(19) Europäisches Patentamt / European Patent Office / Office européen des brevets

(11) **EP 4 047 840 A2**

(12) **EUROPÄISCHE PATENTANMELDUNG**

(43) Veröffentlichungstag:
 24.08.2022  Patentblatt 2022/34

(21) Anmeldenummer: 22153917.4

(22) Anmeldetag: **28.01.2022**

(51) Internationale Patentklassifikation (IPC):
 **H04B 17/21** (2015.01)

(52) Gemeinsame Patentklassifikation (CPC):
 **H04B 17/21**

(84) Benannte Vertragsstaaten:
 **AL AT BE BG CH CY CZ DE DK EE ES FI FR GB GR HR HU IE IS IT LI LT LU LV MC MK MT NL NO PL PT RO RS SE SI SK SM TR**
 Benannte Erstreckungsstaaten:
 **BA ME**
 Benannte Validierungsstaaten:
 **KH MA MD TN**

(30) Priorität: **01.02.2021  DE 102021102208**

(71) Anmelder: **Diehl Metering Systems GmbH**
 **90451 Nürnberg (DE)**

(72) Erfinder:
 • **Petkov, Hristo**
  **90411 Nürnberg (DE)**

 • **Schmidt, Christoph**
  **90403 Nürnberg (DE)**
 • **Kauppert, Thomas**
  **90455 Nürnberg (DE)**
 • **Gottschalk, Klaus**
  **90610 Winkelhaid (DE)**
 • **Schröter, Simon**
  **91052 Erlangen (DE)**
 • **Meyer, Benjamin**
  **90419 Nürnberg (DE)**

(74) Vertreter: **Diehl Patentabteilung**
 **c/o Diehl Stiftung & Co. KG**
 **Stephanstraße 49**
 **90478 Nürnberg (DE)**

(54) **VERFAHREN ZUM VERBESSERN DER ANTENNENANPASSUNG**

(57)  Verfahren zum Verbessern der Antennenanpassung bei einem funkkommunikationsfähigen Knoten (1), insbesondere einer Sensor- und/oder Aktoreinrichtung, eines Kommunikationsnetzwerkes mit einem mit einer Antenne (3) ausgestatteten Funkmodul (2) mit Sende- (5) und/oder Empfangspfad (6) für auszusendende und/oder zu empfangende Funksignale und einer vorzugsweise energieautarken Energieversorgungseinrichtung (4), insbesondere Batterie, wobei die Antenne (3) eine Impedanz (Z_Ant) aufweist, wobei im Empfangsfall und/oder im Sendefall bei einstellbaren Anpassungen (Z0, Z1, Zn), vorzugsweise mittels einstellbarer Anpassnetzwerke, das jeweils Anpassung-zugehörige SNR-Verhältnis (SNR0, SNR1, SNRn) geschätzt wird und eine Anpassung aus den unterschiedlichen Anpassungen (Z0, Z1, Zn) für den Empfangs- und/oder den Sendebetrieb ausgewählt wird.

Fig. 3

EP 4 047 840 A2

**Beschreibung**

Die Erfindung betrifft ein Verfahren nach dem Oberbegriff des Patentanspruchs 1 zum Verbessern der Antennenanpassung eines uni- oder bidirektional funkkommunikationsfähigen Knotens eines Kommunikationsnetzes, insbesondere einer Sensor- und/oder Aktoreinrichtung. Die vorliegende Erfindung betrifft ferner einen funkkommunikationsfähigen Knoten, der gemäß dem vorliegenden Verfahren betrieben wird.

Technologischer Hintergrund

Die derzeitige Entwicklung in der Kommunikationstechnik geht dahin, stets mehr und mehr Prozessoren, Kommunikationsmodule sowie andere Elektronikkomponenten in Gegenständen des täglichen Gebrauchs zu integrieren. Auch einfache elektrische Geräte des täglichen Gebrauchs sollen in absehbarer Zukunft mit einer Kommunikationsfähigkeit ausgestattet werden. Man erhofft sich durch diese Entwicklung große Chancen für die Wirtschaft, aber auch für das Privatleben. Smarte bzw. intelligente Objekte werden zunehmend mit Informations- und Kommunikationstechnik ausgestattet und an den Cyberspace mit seinen umfangreichen Diensten angebunden. Hierdurch werden alltägliche Gegenstände eine neue Qualität erhalten. Gegenstände können über Sensoren ihre Umgebung wahrnehmen, sich miteinander vernetzen, auf Internetservices zugreifen oder sogar mit Menschen interagieren. Derartige Sensoren sollen als "Knoten" im sogenannten IoT ("Internet of Things") eingesetzt werden. "Knoten" können aber auch Aktoren sein, die mechanisch oder elektromagnetisch auf Gegenstände einwirken, oder diese mit (elektrischen, vorzugsweise digitalen) Steuersignalen beaufschlagen.

Derartige Sensoren bzw. Aktoren sollen möglichst kleinbauend sein. Da ein Netzanschluss oftmals nicht verfügbar ist, müssen sie in der Regel autark mit Batterien betrieben werden. Deshalb muss eine Funkkommunikation mit möglichst geringem energetischen Aufwand zuverlässig betrieben werden können. Das setzt im Funkmodul eines Knotens eine hohe Gesamtempfindlichkeit infolge guter Resonanzanpassung der Schaltung an die Antenne voraus. Aufgrund des geringen zur Verfügung stehenden Bauraums bei derartigen Kommunikationsmodulen ist die Antenne zwangsläufig schmalbandig.

Hinzukommt, dass eine mehr und mehr gesteigerte Leistungsfähigkeit in Bezug auf das Generieren und Versenden von Daten gefordert wird, mit der Folge, dass gleichzeitig der Energieverbrauch der Knoten zunehmen wird. Die Technologie im Bereich der Speicherung von elektrischer Energie schreitet jedoch nicht so rasch voran. Eine erweiterte Funktionalität der Knoten durch das sogenannte IoT wird daher Probleme in Bezug auf den hierdurch notwendigen Energieverbrauch mit sich bringen.

Bei Sensoren besteht zudem ein Interesse, die Situations- oder Objektumgebung der Sensoren bei der Auswertung der mit den Sensoren gezielt abgefragten per Funk übertragenen Messgrößen zu erfragen. Beispielsweise ist es möglich, dass Sensoreinrichtungen an falschen Orten oder in falschen Gehäusen, als dies ursprünglich geplant war, installiert werden. Ferner möchte man bei Sensoren Kenntnis von bestimmten Gegebenheiten erhalten, wie z. B. über Manipulationen an fest installierten Sensoren (z.B. Verbrauchszählern) oder Abschirmungen von Sensoren. Beispielsweise können z.B. Metallteile oder dielektrische Materialien, wie z.B. Kunststoffteile, in der Umgebung einer Antenne des Sensors oder Aktors deren Impedanz beeinflussen, sodass eine flexible Impedanzanpassung erwünscht ist. Zudem können temporäre Störer dazu führen, dass Pakete zwar noch empfangen werden können, aber eine verminderte Empfangsleistung liefern. In diesem Rahmen ist es wünschenswert, eine zusätzliche Sensorik an den betreffenden Sensoren oder Aktoren einzusetzen. Diese benötigt jedoch wiederum zusätzliche Sensoren und/oder Prozessoren, die den Energieverbrauch zusätzlich belasten.

Druckschriftlicher Stand der Technik

Ein Verfahren gemäß dem Oberbegriff des Anspruchs 1 ist aus der DE 10 2016 010 045 A1 bekannt. Hierbei handelt es sich um ein Verfahren zum Verbessern der Antennenanpassung bei einem Smart-Meter-Zähler im Sendebetrieb. Die Antennenanpassung kann durch Umschalten zwischen unterschiedlich bemessenen Anpassnetzwerken erfolgen, welche Induktivitäten und/oder Kapazitäten umfassen. Jeder Smart-Meter-Zähler eines Netzwerks sendet eine Mehrzahl von Testpaketen mit entsprechend unterschiedlichem Anpassnetzwerk an einen Datensammler. Der Datensammler wertet die Testpakete aller Smart-Meter-Zähler hinsichtlich dessen Empfangsfeldstärke aus, wählt das Testpaket mit der höchsten Empfangsfeldstärke aus und meldet die Auswahl zurück an den jeweiligen Smart-Meter-Zähler. Dieser sendet fortan mit der entsprechenden Antennenanpassung. Nachteilig bei diesem Verfahren ist es, dass bei vor allem schwachen Signalleistungen z. B. bei einem Knoten, der sich an der Grenze einer Funkzelle befindet, keine Unterscheidung und somit keine Auswahl einer bestimmten Antennenanpassung mehr möglich ist. Zudem wird durch das vermehrte Senden von Testpaketen die Batterie belastet.

Aufgabe der vorliegenden Erfindung

Die Aufgabe der vorliegenden Erfindung besteht darin, das gattungsgemäße Verfahren hinsichtlich seiner Antennenanpassung weiter zu verbessern.

Lösung der Aufgabe

Die Aufgabe wird durch ein Verfahren mit den Merkmalen nach Patentanspruch 1 gelöst. Zweckmäßige Ausgestaltungen des erfindungsgemäßen Verfahrens sind in den weiteren Ansprüchen beansprucht.

Erfindungsgemäß wird im Empfangsfall bei einem variablen Antennenmatching, mittels unterschiedlicher Anpassungen, welche unterschiedliche Transformationswege ermöglichen, vorzugsweise durch einstellbare Anpassnetzwerke, das jeweils Impedanzanpassung-zugehörige SNR-Verhältnis z.B. im Knoten geschätzt und z.B. vom Knoten eine Anpassung aus den unterschiedlichen Anpassungen für den Empfangs- und/oder den Sendebetrieb des Knotens ausgewählt.

Da gemäß der Erfindung eine Antennenanpassung im Empfangsfall des Knotens erfolgen kann, ist kein vorheriges Senden wie bei dem Verfahren gemäß der DE 10 2016 010 045 A1 notwendig. Alternativ kann bei dem erfindungsgemäßen Verfahren, wie in DE 10 2016 010 045 A, auch gesendet werden. Allerdings genügt es hierbei lediglich ein Telegramm oder einige wenige Telegramme im Uplink zu senden. Der Empfänger in der Basisstation schätzt dann das SNR-Verhältnis anstatt wie bei der DE 10 2016 010 045 A die Signalleistung. Durch die Erfindung wird es möglich, auch Systeme, die kleine oder auch negative SNRs haben, zu unterstützen. Das ist in DE 10 2016 010 045 A nicht möglich. Ein Knoten, der sich an der Funkzellengrenze befindet, wird lediglich nur noch mit sehr wenig Signalleistung empfangen. Wenn das System z.B. ein negatives SNR von z.B. -8 dB unterstützt, kann der Empfänger, z. B. eine Basisstation, eine Signalleistung, die das SNR von -8 dB auf -4 dB steigen lässt, nicht unterscheiden.

Vorzugsweise kann eine Schätzung des SNR über mehrere Pakete innerhalb eines Telegramms mehrmals vorgenommen werden, was Energie in dem Funkkanal spart. Durch das SNR wird auch die Detektion von Störer ermöglicht, um falsche Messungen zu detektieren und auszusondern. Mit dem erfindungsgemäßen Verfahren wird erheblich weniger Energie verbraucht. Als Folge davon kann die Betriebsdauer bei einem z. B. mit einer Batterie, vorzugsweise Longlife-Batterie, energieautark betriebenen Knoten ganz erheblich verlängert werden. Zudem wird aufgrund des erfindungsgemäß möglichen Empfangsbetriebs zur Antennenanpassung eine erhebliche Entlastung des Funkkanals erreicht, da Sensor- oder Aktoreinrichtungen eines Datennetzwerks die verschiedenen Antennenanpassungen nicht mehr vorher im Sendebetrieb zur Überprüfung durch einen empfangenden Knoten bzw. Basisstation nacheinander übertragen müssen. Durch die Anpassung der Impedanz können ferner Reflexionsverluste verringert bzw. vermieden werden. Die Erreichbarkeit der Knoten im Downlink wird verbessert. Die entsprechend angepasste Impedanz kann auch für den Sendebetrieb verwendet werden, wodurch die Qualität der Datenübertragung vom betreffenden Knoten zu dem Empfänger der Sendung verbessert werden.

Zweckmäßigerweise werden mehrere unterschiedliche Impedanzen der Antenne über Anpassnetzwerke eingestellt, wobei eine Anpassung der Impedanz auf Basis eines Vergleichs der durch z. B. unterschiedliche Anpassnetzwerke oder Anpassnetzwerk begründeten, unterschiedlichen SNR-Verhältnisse des Empfangspfads des Funkmoduls im Empfangsfall erfolgt. Durch die unterschiedlichen Anpassnetzwerke kann die Gesamtempfindlichkeit des Empfangspfads unter Einbeziehung der Impedanz der Antenne verändert werden. Um herauszufinden, welche Anpassung am besten ist, werden die jeweiligen SNR-Verhältnisse ermittelt und direkt oder daraus abgeleitete Werte miteinander verglichen. Für jede Impedanzanpassung, d. h. für jeden Transformationsweg bzw. Matching, kann somit jeweils ein zugehöriges SNR-Verhältnis ermittelt werden.

Demgemäß kann vorgesehen sein, dass sukzessive mehrere unterschiedliche Anpassungen (Matchings) über die Anpassnetzwerke eingestellt werden, zu denen jeweils das zugehörige SNR-Verhältnis ermittelt wird und ein Matching davon aus der Anzahl der Anpassungen anhand eines von dem ermittelten SNR-Verhältnis abhängigen Kriteriums für den Sende- und/oder Empfangsbetrieb ausgewählt wird.

Vorzugsweise wird diejenige Anpassung ausgewählt, bei der das geschätzte SNR-Verhältnis und/oder der daraus abgeleitete Wert für einen Empfangs- und/oder einen Sendebetrieb des Knotens am günstigsten oder geeignetsten ist. Beispielsweise handelt es sich hierbei vorzugsweise um das Matching mit dem größten geschätzten SNR-Verhältnis.

Das SNR-Verhältnis betrifft das Verhältnis von Signalleistung zu Rauschleistung. Das SNR-Verhältnis kann von einem analogen Signal oder alternativ von einem digitalen Signal bestimmt werden. Aus dem SNR-Verhältnis kann die Rauschzahl ermittelt werden.

In Fall eines digitalen Signals handelt es sich um bei dem SNR-Verhältnis um ein Carrier-to-Noise-Verhältnis (CNR bzw. C/N). Das Carrier-to-Noise-Verhältnis bertifft das Verhältnis der Leistung des modulierten Carrier-Signals zur Rauschleistung nach dem Filtern.

Das erfindungsgemäße Verfahren kann vorteilhaft auch bei einem negativen SNR-Verhältnis angewendet werden.

Bei der Bestimmung des SNR-Verhältnisses kann die Bandbreite der Übertragung als zusätzliche Kenngröße miteinbezogen werden. Insbesondere wird das SNR-Verhältnis lediglich für eine bestimmte Bandbreite berücksichtigt. Hierdurch kann eine noch genauere Bestimmung des SNR-Verhältnisses erfolgen.

Im Rahmen des erfindungsgemäßen Verfahrens kann bei der Bestimmung des SNR-Verhältnisses für mindestens ein Bit die Energie (Leistung) pro Bit zur Rauschleistung oder alternativ für mindestens ein Symbol die Energie (Leistung) pro Symbol zur Rauschleistung bestimmt und in Abhängigkeit der auswählbaren Anpassschaltungen verglichen werden.

Die Ermittlung des SNR-Verhältnisses erfolgt vorzugsweise bezogen auf die Empfangs-Bandbreite eines ein Symbol repräsentierenden Frequenzbereichs. Vorzugsweise kann hierbei die Symbolleistung von mehreren, vorzugsweise gleichen, Symbolen zur Ermittlung des SNR-Verhältnisses herangezogen werden.

Bei den Symbolen handelt es sich vorzugsweise um Symbole auf Basis von Frequenz- und/oder Amplitudenmodulation wie z. B. MSK-, FSK, QPSK-Modulation.

Vorzugsweise kann z. B. bei einem MSK-Symbol nach einer Detektion der Phasendrehung des MSK-Symbols die Rauschleistung aus der Orthogonalen bestimmt werden.

Bei einer FSK-Modulation kann je ein Filter für ein Symbol oder Bit gestellt werden und zur SNR-Schätzung die Rauschleistung von der Signalleistung getrennt werden.

Zur Berücksichtigung der Bandbreite werden (vorzugsweise analoge und/oder digitale) Filter miteinander verkettet. Analoge Signale können hierbei vorzugsweise digital dargestellt werden. Hierdurch kann die Rauschleistung von der Signalleistung für die SNR-Schätzung getrennt werden.

Vorzugsweise befindet sich der Knoten bzw. sein Funkmodul im Normalfall in einem Sleep-Modus und öffnet lediglich zu bestimmten Zeitpunkten ein Empfangsfenster, während dem eine Suche nach auswertbaren Empfangssignalen erfolgt. Hierdurch kann der Energieverbrauch niedrig gehalten werden.

Sofern eine Suche nach einem Empfangssignal innerhalb eines Emp-fangsfensters negativ war, wird das Empfangsfenster wieder geschlossen und es kann nach einem festgelegten Modus ein neues Empfangsfenster geöffnet werden, in dem eine neue Suche durchgeführt wird. Diese Vorgehensweise kann solange wiederholt werden, bis schließlich ein Empfangssignal gefunden worden ist. Auch hierdurch wird die autarke Energiequelle geschont.

Zur Suche des Empfangssignals und Ermittlung bzw. Schätzung des SNR-Verhältnis kann die Empfangs-Bandbreite in einzelne Frequenzkanäle aufgeteilt werden, wobei in jedem Frequenzkanal eine Leistungsmessung durchgeführt wird. Die in den Frequenzkanälen gemessenen Leistungen können dann verglichen und daraus das Vorhandensein eines Empfangssignals bzw. die Empfangssignal-Leistung ermittelt bzw. geschätzt werden.

Die Leistungserfassung erfolgt vorzugsweise lediglich für einen ausgewählten Frequenzbereich der Empfangs-Bandbreite. Z. B. kann im Fall einer FSK Modulation die Eigenschaft ausgenutzt werden, dass nur ein Symbol bzw. ein Bit zu jeweils einem bestimmten Zeitpunkt gesendet werden darf. Wenn man z. B zwei Filter, die die Symbolbandbreite haben, einsetzt, können Signal- und Rauschenergie leicht getrennt werden. Hierdurch kann zusätzlich die erforderliche Mikroprozessorleistung und daraus folgend der Energieverbrauch reduziert werden.

Zur Suche des Empfangssignals und zur Schätzung des SNR-Verhältnisses kann eine gemessene Leistung auch in Relation zur Symboldauer oder einem Vielfachen davon gesetzt und/oder das Eingangssignal über der Zeitdauer bzw. der Symboldauer analysiert werden.

Zur Suche des Empfangssignals und/oder Ermittlung bzw. Schätzung des SNR-Verhältnisses kann die Erfassung der Leistung über eine Folge mehrerer gleicher Bits oder Symbole erfolgen. Hierdurch wird die Genauigkeit der Ermittlung bzw. Schätzung des SNR-Verhältnisses noch zusätzlich erhöht.

Gemäß einer zweckmäßigen Ausgestaltung werden gleiche Symbole im Eingangssignal detektiert, die detektierten Symbole werden encodiert und es werden zur Ermittlung bzw. Schätzung des SNR-Verhältnisses für die einzelnen Symbole benutzt. In einer MSK Modulation kann man die SNR-Schätzung z. B. so implementieren, dass die Signal- und Rauschleistung eine Phasendifferenz von 90° haben. Dies kann bei der Trennung der Signalleistung von der Rauschleistung helfen. Die unterschiedlichen S- und N-Anteile können zusammengesetzt werden, um ein SNR zu bekommen oder für die Ermittlung der Impedanz auch einzeln benutzt werden.

Alternativ kann auf Basis einer Korrelation mit einer vorbekannten Bitsequenz des Eingangssignals festgestellt werden, ob ein Eingangssignal vorliegt oder nicht. Auf Basis einer vorbekannten Sequenz, insbesondere einer Pilotsequenz, Trainingssequenz oder Synchronisationssequenz, können die SNR-Schätzungen gemacht werden. Die Synchronisationssequenz kann als Präambel, Midambel oder Postambel implementiert sein.

Hierbei kann bei einer Mehrzahl von Symbolen eine Mittelung der Leistungsanteile im Realteil vorgenommen, wobei der Rauschanteil durch die Mittelung abgezogen wird.

Bei der Ermittlung des SNR-Verhältnisses bei digitalen Signalen kann das Eingangssignal über eine entsprechende Schnittstelle sogleich in digitale Daten bzw. I/Q-Daten gewandelt werden und das jeweilige SNR-Verhältnis anhand der digitalen Daten bzw. I/Q-Daten digital ermittelt werden. Beispielsweise können hierzu nach dem Empfänger aus dem digitalen Datenstrom, z. B. über einen Schalter, Daten aus dem Datenstrom abgezweigt und speziell für eine SNR-Bestimmung herangezogen werden.

Es ist allerdings auch eine analoge Leistungsbestimmung möglich. Hierbei werden die jeweiligen Werte des SNR geschätzt und sogleich im Empfangschip gespeichert. Diese Maßnahme ist schneller, weil man nur einige Bits oder Symbole abwarten muss anstatt das ganze Paket. Eine Einstellung der Impedanz bzw. Auswahl der Impedanzanpassung kann bereits anhand dieser Vorgehensweise vorgenommen werden.

Insbesondere kann vorgesehen sein, dass die unterschiedlichen Impedanzanpassungen innerhalb eines Datenpakets, vorzugsweise innerhalb einer Synchronisationssequenz desselben durchlaufen werden, wobei das jeweilige SNR-Verhältnis erfasst wird, die SNR-Verhältnisse zu den unterschiedliche Impedanzen verglichen werden, und eine Impedanz Einstellung davon ausgewählt wird, bei der das ermittelte SNR-Verhältnis hoch, vorzugsweise am höchsten ist.

Die Art oder Herkunft des Empfangssignals zur Bestimmung des SNR-Verhältnisses kann unterschiedlich sein. Beispielsweise kann es sich um ein insbesondere Leistungs- und/oder Sendezeit-standardisiertes Downlink-Signal eines anderen Knotens, z. B. eines Datensammlers oder einer Basisstation des Funknetzes oder um ein Uplink-Signal mit einer vorzugsweise vorbekannten Wellenform mindestens eines anderen Knotens des Funknetzes handeln. In letzterem Fall ist die Wahrscheinlichkeit, dass man ein Paket trifft aufgrund der vollen Kanalauslastung besonders hoch. Es kann jedoch auch ein Fremd-Nutzsignal mit einer vom Knoten verwendeten Wellenform genutzt werden.

Eine weitere zweckmäßige Ausgestaltung des erfindungsgemäßen Verfahrens besteht darin, dass eine Abhängigkeit des Gain von den anpassungsbedingten unterschiedlichen Transformationswegen empirisch ermittelt und im Knoten abgespeichert ist. Ferner kann eine Abhängigkeit der Rauschleistung von den anpassungsbedingten unterschiedlichen Transformationswegen des Empfangspfads empirisch festgestellt und ebenfalls im Knoten abgespeichert sein, wobei die Impedanz der Antenne aus der durch die unterschiedlichen Impedanz Einstellungen bedingten Änderung des Gain sowie der Rauschleistung ermittelt bzw. abgeschätzt wird. Dies kann vorzugsweise anhand einer Näherungsbetrachtung oder Best-Fit-Betrachtung durchgeführt werden.

Vorteilhaft können hierzu die Rauschzahl und/oder die Rauschzahlveränderung und/oder der Verstärkungsfaktor und/oder eine Veränderung des Verstärkungsfaktors und/oder empirisch geschätzte Leistungsanteile S und Rauschanteile N für eine Mehrzahl von Impedanzen des Empfangspfads empirisch ermittelt und im Knoten für einen späteren Abruf gespeichert werden, wobei

eine Mehrzahl der vorher festgelegten, auswählbaren Trans-formationswegen durchlaufen wird, bei denen jeweils eine Veränderung der Impedanz des Empfangspfads erfolgt,
aus den obigen Daten jeweils eine zugehörige Modell-Rauschzahl und/oder ein zugehöriger Modell-Verstärkungsfaktor ermittelt und daraus ein Modell-Grundrauschen berechnet wird,
während des Betriebs des Knotens für die Transformationswege das Grundrauschen gemessen wird,
während des Betriebs des Knotens für die Transformationswege der Gain gemessen wird.

Vorteilhaft kann vorgesehen sein, dass der Knoten bei unterschiedlichen Impedanzen mehrere Pakete oder Teile von Paketen aussendet, ein Empfänger in einer Basisstation SNR-Schätzungen auf Basis der Pakete oder den Teilen von Paketen vornimmt und dem Knoten eine SNR aus den geschätzten SNRs, vorzugsweise die höchste SNR bzw. die beste Anpassung oder eine entsprechende darauf basierende Information, mitteilt.

Ferner kann vorgesehen sein, dass der Knoten ein Paket oder einen Teil eines Pakets bei den unterschiedlichen Anpassungen bzw. Transformationswegen aussendet, und in einem empfangenden weiteren Knoten, z. B. einer Basisstation, die unterschiedlichen Anpassungen bzw. Transformationswege bekannt sind, in der Basisstation für die unterschiedlichen Anpassungen bzw. Transformationswege die SNRs berechnet werden und die Basisstation dem Knoten eine SNR aus den berechneten SNRs, vorzugsweise die höchste SNR bzw. die beste Anpassung oder eine entsprechende darauf basierende Information, mitteilt.

Vorzugsweise wird eine Änderung des SNR-Verhältnisses ohne Änderung der Anpassschaltung erfasst und/oder ausgewertet.

Gemäß einer Ausgestaltung des vorliegenden Verfahrens können die SNR-Verhältnisse eines Sendefalls des Knotens und eines Empfangsfalls in der Basisstation miteinander kombiniert berücksichtigt und/oder ausgewertet werden. Hierdurch kann die Rauschanpassung beim Empfang sowie die Rauschanpassung beim Senden gleichzeitig optimiert werden.

Die vorliegende Erfindung betrifft ferner einen uni- oder bidirektional funkkommunikationsfähigen Knoten, insbesondere eine Sensor- und/oder Aktoreinrichtung eines Kommunikationsnetzes, welcher mit einem Verfahren nach einem der Ansprüche 1 bis 20 betrieben wird.

Die langzeitautarke Energieversorgungseinrichtung, insbesondere Longlife-Batterie, des Knotens weist insbesondere eine Kapazität von weniger als 10Ah auf. Aus diesem Grund ist der Energieeinspareffekt des erfindungsgemäßen Verfahrens im Vergleich zu den bekannten Verfahren zur Verbesserung der Antennenanpassung besonders wichtig.

Das erfindungsgemäße Verfahren eignet sich bevorzugt für Schmalbandsysteme, d.h. insbesondere für Bandsysteme bei einer Frequenz von kleiner 100 kHz, vorzugsweise kleiner 80 kHz, besonders vorzugsweise kleiner 50 kHz.

Insbesondere die Antenne eine 3-dB-Brandbreite von weniger als 1 MHz.

Beschreibung der Erfindung anhand von Ausführungsbeispielen

Nachfolgend wird die Erfindung anhand von bevorzugten Ausführungsbeispielen unter Bezug auf die Zeichnungen näher erläutert. Es zeigen:

Fig. 1      eine stark vereinfachte schematische Darstellung einer Anordnung mehrerer bidirektional funkkommunikationsfähiger Knoten sowie einer Basisstation und einer Datenzentrale bzw. Cloud in einem Kommunikationsnetzwerk,

Fig. 2      eine stark vereinfachte schematische Darstellung eines Beispiels eines Knotens des Kommunikationsnetzwerks von Fig. 1 z. B. in Form einer Sensoreinrichtung,

Fig. 3      eine stark vereinfachte schematische Darstellung eines ersten Beispiels eines Sende- sowie Empfangspfads des Knotens des Kommunikationsnetzwerks von Fig. 1;

Fig. 4      eine stark vereinfachte schematische Darstellung eines zweiten Beispiels eines Empfangspfads des Knotens des Kommunikationsnetzwerks von Fig. 1;

Fig. 5      ein beispielhafte Darstellung der aufaddierten Rauschleistung R des Empfängers des Knotens bei einer Temperatur von 20°C sowie einer Aufteilung in zwei Bänder;

Fig. 6A     eine stark vereinfachte schematische Darstellung des Leistungsverlauf eines MSK modulierten Signals;

Fig. 6B     eine stark vereinfachte schematische Darstellung einer Frequenzkanalaufteilung im Frequenzbereich eines Symbols oder Bits;

Fig. 6C     eine stark vereinfachte schematische Darstellung der je Frequenzkanal gemessenen Leistung im Frequenzbereich eines Symbols oder Bits;

Fig. 7      eine stark vereinfachte schematische Darstellung einer anderen Frequenzkanalaufteilung im Frequenzbereich eines Symbols oder Bits;

Fig. 8      eine stark vereinfachte schematische Darstellung einer Signalfolge über dem Zeitbereich;

Fig. 9      eine stark vereinfachte schematische Darstellung in kartesischen Koordinaten einer Symbol- oder Bit-Sequenz über der Zeit;

Fig. 10A    eine stark vereinfachte schematische Darstellung der Zusammenhänge in einem Smith-Diagramm für eine Schätzung auf Basis eines Best-Fit-Ansatzes;

Fig. 10B    eine stark vereinfachte schematische Darstellung weiterer Zusammenhänge in dem Smith-Diagramm für eine Schätzung auf Basis eines Best-Fit-Ansatzes; sowie

Fig. 11     eine stark vereinfachte schematische Darstellung einer Anordnung zur Bestimmung der SNR-Verhältnisse anhand von I/Q-Daten.

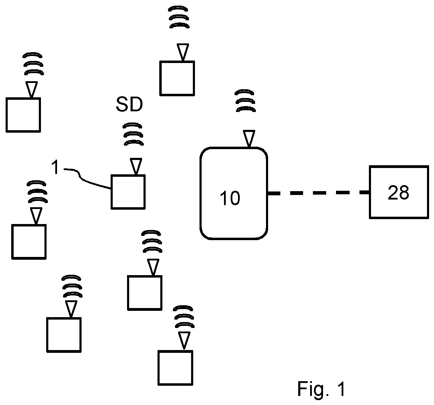

Fig. 1 zeigt eine Anordnung mehrerer uni- oder bidirektional funkkommunikationsfähiger Knoten 1 z. B. in Form von Sensoreinrichtungen. Diese senden im Uplink Daten SD z. B. Verbrauchsdaten und/oder sonstige Betriebsdaten per Funk an eine Basisstation 10. Hierbei kann es sich z. B. um einen Datensammler handeln. In der Basisstation 10 werden die Daten aufbereitet und z. B. über das Internet zur weiteren Verwendung an eine Datenzentrale 28 oder Cloud weitergeleitet. Bei einem bidirektional funkkommunikationsfähigen Knoten 1 kann dieser von der Basisstation 10 im Downlink Daten empfangen. Zusätzlich kann bei Bedarf gemäß einer Ausgestaltungsvariante auch so konzipiert sein, dass Knoten 1 auch miteinander kommunizieren können.
Ein Knoten in Form einer Sensoreinrichtung kann z. B. eine physikalische oder chemische Eigenschaft E messen, beispielsweise die Temperatur eines Objekts, den Durchfluss eines Fluids als Bestandteil eines Durchflusszählers oder die elektrische Leitzahl (um beispielsweise einen Salzgehalt zu messen). Eine Sensoreinrichtung kann alternativ z.B. die stoffliche Beschaffenheit B oder beispielsweise eine Wasserqualität anhand der Reaktion mit Reagenzien ermitteln. Ein Farbumschlag zeigt, ob die Qualität des Wassers ausreichend gut ist. Schließlich kann eine Sensoreinrichtung auch Messgrößen bezüglich einer situativen Information I erzeugen. Derartige Sensoreinrichtungen können generell bei der Umsetzung des "Internet of Things" (IoT) eingesetzt werden.

Der Knoten 1 könnte auch eine Aktoreinrichtung sein. Ein Aktor erhält elektrische Signale und wirkt auf ein äußeres Objekt ein. Neben dem klassischen Fall einer mechanischen Einwirkung (etwa über ein Stößel, den der Aktor betätigt) gibt es die Möglichkeit einer elektromagnetischen Einwirkung (wenn der Aktor ein elektrisches oder magnetisches Feld erzeugt, das einen ferromagnetischen Gegenstand in einer bestimmten Position hält). Schließlich kann der Aktor auch eine sekundäre Reaktion in dem Objekt über Steuersignale hervorrufen und gewissermaßen als Übersetzer von Signalen, die er selbst über Funk empfängt, in elektrische Signale dienen, die er über eine Leitung weitergibt.

Schließlich könnte ein Knoten 1 sowohl Eigenschaften einer Sensoreinrichtung der oben beschriebenen Art als auch zugleich einer Aktoreinrichtung der oben beschriebenen Art ins sich vereinen.

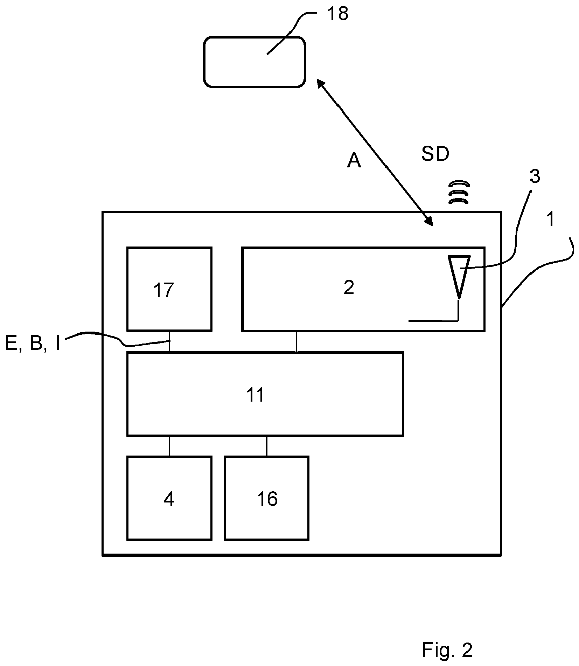

Anhand der Fig. 2 wird ein beispielhafter Aufbau eines Knotens 1 in Form einer Sensoreinrichtung näher erläutert, die aber prinzipiell auch bei einer Aktoreinrichtung identisch oder ähnlich gegeben sein kann.

Der Knoten 1 umfasst eine langzeitenergieautarke Energieversorgungseinrichtung 4, insbesondere eine Batterie. Diese ist insbesondere so ausgelegt, dass sie den Knoten 1 über Jahre hinweg mit elektrischer Energie versorgt (Longlife-Batterie). Vorzugsweise weist die Energieversorgungseinrichtung im Hinblick auf eine energiesparende Betriebsweise eine Kapazität von nicht mehr als 10 Ah auf.

Ferner ist ein Funkmodul 2 vorgesehen, an dem eine Antenne 3 ausgebildet ist. Die Antenne 3 kann in dem Funkmodul 2, vorzugsweise auf dessen Platine, untergebracht sein. Sie kann jedoch auch mit dem Funkmodul 2 vorzugsweise lösbar verbunden sein. Darüber hinaus umfasst der Knoten 1 einen Mikroprozessor 11, welcher als Teil des Funkmoduls 2 oder auch separat davon vorgesehen sein kann. Der Mikroprozessor 11 umfasst einen Speicher 16. Ferner kann mindestens ein Sensorelement 17, z.B. ein Temperaturfühler, piezoelektrischer Wandler oder dergleichen vorgesehen sein, welches dazu dient, eine physikalische oder chemische Eigenschaft E, eine stoffliche Beschaffenheit B oder eine situative Information I zu erfassen und eine entsprechende Messgröße E, B, I auszugeben.

Des Weiteren ist in Fig. 2 lediglich beispielhaft zur Veranschaulichung ein Objekt 18 in der Nähe der Antenne 3 des Funkmoduls 2 in einem Abstand A zum Knoten 1 dargestellt. Bei einem solchen Objekt 18 kann es sich beispielsweise um einen temporären Störer oder aber um einen permanent vorhandenen Störer handeln, der eine Verstimmung der Antenne 3 und damit des Empfangs bewirkt.

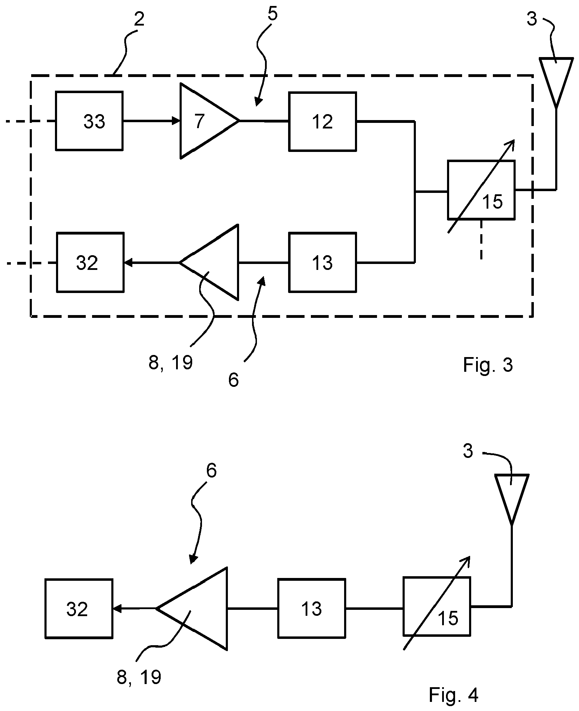

Fig. 3 zeigt in stark vereinfachter schematischer Darstellungsweise eine beispielhafte Variante des Sende- 5 sowie Empfangspfads 6 des Funkmoduls 2 eines bidirektional kommunikationsfähigen Knotens 1. Der Sendepfad 5 umfasst ein TX-Modulationsglied 9 zur Modulation z. B. der von dem in Fig. 3 nicht dargestellten Sensor stammenden Signale, einen PA bzw. Leistungsverstärker 7 sowie ein Anpassungsglied 12, welches eine Anpassung z.B. auf 50 Ohm bewirkt. Der Empfangspfad 6 umfasst ebenfalls ein entsprechendes Anpassungsglied 13 sowie einen Verstärker, z.B. einen LNA 8 ("Low Noise Amplifier") und/oder ein RF Front-End 19, zur Verstärkung der über die Antenne 3 empfangenen Signale.

Der Empfangspfad 6 umfasst des Weiteren ein SNR-Schätzglied 32, dessen Funktionsweise im Nachgang näher erläutert wird. Der Antenne 3 nachgeordnet ist ein Anpassungsglied 15 zur wahlweisen Einstellung unterschiedlicher Anpassungen Z0, Z1, Zn also unterschiedlicher Antennenmatchings M0, M1, Mn oder Transformationswege für den Empfangs- und/oder den Sendebetrieb des Knotens 1. Hierdurch kann ein mehrstufiges jeweils unterschiedliches Antennenmatching erfolgen. Als wahlweise schaltbare Anpassungen können beispielsweise solche vorgesehen sein, wie sie in der DE 10 2016 010 045 A1 beschrieben sind. Alternativ oder zusätzlich können zu diesem Zweck auch andere steuerbare, das Antennenmatching anpassende Elemente wie z. B. durch Spannung sich ändernde Kapazitäten (z. B. Kapazitätsdioden) zum Einsatz kommen. Die Ansteuerung des Anpassungsglieds 15 kann vorzugsweise durch den in Fig. 3 nicht dargestellten Mikroprozessor 11 erfolgen. Die Quellimpedanz des LNA 8 setzt sich zusammen aus der unbekannten Antennenimpedanz Z_Ant und dem durch das jeweilige Antennenmatching M0, M1, Mn gegebenen Transformationsweg. Eine Leistungsmessung (Signal bzw. Rauschen) erfolgt vorzugsweise am oder nach dem Ausgang des LNA 8.

Ein Knoten 1 befindet sich im Normalfall im Sleepmodus, um Energie zu sparen. Um ein Empfangssignal zu empfangen, wird vom Knoten 1 ein Empfangsfenster geöffnet, indem der Mikroprozessor 11 den Empfangspfad 6 einschaltet, d.h. diesen "auf Empfang schaltet". Sobald ein Empfangssignal über die Antenne 3 empfangen wird, wird mittels des Anpassungsglieds 15 eine Anpassung Z0, Z1, Zn des die Antenne 3 einschließenden Empfangspfads 6 sukzessive verändert und in dem SNR-Schätzglied 32 hierzu jeweils das zugehörige SNR-Verhältnis SNR, SNR1, SNRn oder dessen Änderung geschätzt. In dem SNR-Schätzglied 32 wird dann dasjenige SNR-Verhältnis aus der Menge der ermittelten SNR-Verhältnisse SNR, SNR1, SNRn ausgewählt, das günstig, also vorzugsweise am höchsten, ist. Die auserwählte Anpassung aus der Mehrzahl der durchlaufenen Anpassungen Z0, Z1, Zn kann dann für den Sendebetrieb und/oder Empfangsbetrieb verwendet werden. Die adaptive Anpassung der Impedanz ist bei der in Fig. 3 gezeigten beispielhaften Konfiguration gleich. Die Impedanzanpassung betrifft somit hierbei gleichzeitig auch den Sendepfad 5.

Das muss aber nicht unbedingt so sein.

Das Anpassungsglied 15 kann beispielsweise über feste Anpassnetzwerke auf einer Leiterplatte realisiert sein.

Bei der in Fig. 4 gezeigten Konfiguration des Empfangspfads 6 ist das Impedanzanpassungsglied 15 Bestandteil des Empfangspfads 6.

Bei einem unidirektionalen funkkommunikationsfähigen Knoten ist das Anpassungsglied 15 Teil des Empfangspfads 6 oder des Sendepfads 5, abhängig davon, ob der Knoten nur Senden oder nur Empfangen kann.

Bei der Schätzung des Matching-abhängigen SNR-Verhältnisses kann die Bandbreite mit einbezogen werden. Das SNR-Verhältnis SNR1-SNRn kann anhand eines digitalen Empfangssignals oder eines analogen Empfangssignals geschätzt werden.

Gemäß einer weiteren beispielhaften Ausgestaltung der Erfindung kann das von der jeweiligen Antennenanpassung abhängige SNR-Verhältnis auch im Uplink von einem Empfänger (z. B. von einem weiteren Knoten, einer Basisstation 10 oder in der Datenzentrale 28 oder Cloud) geschätzt und die geeignete Antennenanpassung oder eine darauf beruhende Information im Downlink dem Knoten 1 bestätigt werden. Hierbei kann es genügen, lediglich ein Telegramm oder einige wenige Telegramme im Uplink zu versenden.

Vorzugsweise kann das SNR-Verhältnis symbol- und/oder frequenzkanalbezogen ermittelt bzw. geschätzt werden.

Beispielsweise sendet der Knoten 1 auf einer ersten Frequenz für Symbol 1 und auf einer zweiten Frequenz für Symbol 2. Der Empfänger konzentriert sich z. B. auf Symbol 1, indem er die Empfangsbandbreite der ersten Frequenz in mehrere Empfangskanäle aufteilt. Dies geschieht beispielsweise durch eine Frequenzbereichszerlegung z. B. mittels Fourier-Transformation (DFT oder FFT) oder durch Verstellung der Phasenregelschleife (PLL). Durch die Datenrate der Uplink-Wellenform sind die Anzahl der erwarteten belegten Kanäle bekannt. Beispielsweise hat Symbol 1 eine Bandbreite von 25 kHz. Der Empfänger prüft die Leistung in jedem Frequenzkanal. Wenn ein Signal vorhanden wäre, würde er in dem betreffenden Frequenzkanal viel Leistung, in den anderen Frequenzkanälen dagegen wenig oder keine Leistung erfassen. Das Spektrum hängt von der Modulation und vom Pulse-Shaping ab. Diese müssen dem Empfänger bekannt sein.

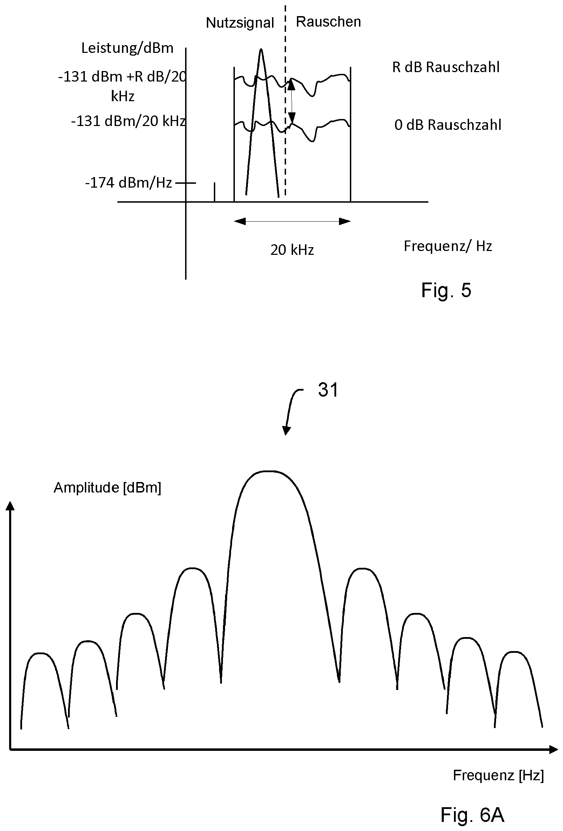

Fig. 6A zeigt beispielhaft das Frequenzspektrum einer bekannten Modulation (z.B. MSK mit Gaussfilter bei BT=1.0). Man erkennt einen definierten Leistungsabstand zwischen Hauptkeule und Nebenkeulen.

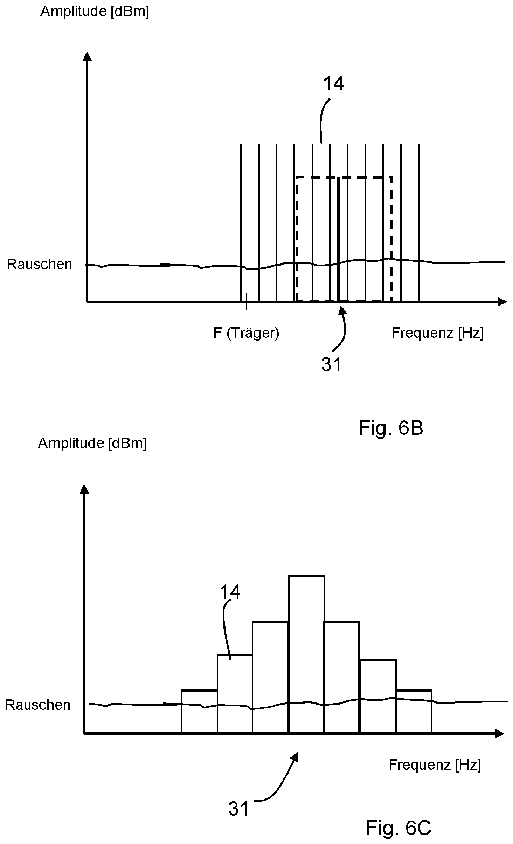

In Fig. 6B ist der Frequenzbereich (gestrichelte Linie) für das Symbol 31 beispielhaft dargestellt. Der Frequenzbereich bzw. das Frequenzspektrum des Symbols 31 hängt von der Modulation und dem sogenannten Puls-Shaping ab. Das Frequenzspektrum umfasst beispielsweise bei einer MSK-Modulation mit Gaussfilter, wie in Fig. 6A gezeigt, eine Hauptkeule und mehreren Nebenkeulen. Um ein Signal zu suchen, kann der interessierende Frequenzbereich, wie in Fig. 6B sowie 6C dargestellt, in die einzelnen Empfangskanäle 14 aufgeteilt werden. Der Empfänger prüft die Leistung in jedem Frequenzkanal 14. Ist ein Signal detektiert worden, so wird, wie in Fig. 6B gezeigt, in einem Kanal 14 eine wesentlich größere Leistung gemessen als in den anderen Kanälen. Im Empfänger sollte die Art der Modulation sowie das Puls-Shaping des Eingangssignals bekannt sein. Wenn somit eine Leistung in einem Kanal 14 festgestellt wird und bezüglich der Frequenz den passenden Abstand hat, hat man ein Signal für ein Symbol detektiert.

Würde demgegenüber der Empfänger keine nennenswerten Unterschiede in den einzelnen Frequenzkanälen 14 feststellen, wäre kein brauchbares Signal vorhanden, sodass der Empfänger wieder ausgeschaltet bzw. das Empfangsfenster wieder geschlossen wird. Zu einem späteren Zeitpunkt kann das Empfangsfenster wieder geöffnet werden.

Auf der Basis der Detektion des Signals sowie des Rauschens kann dann für vom Empfänger im Uplink empfangene Signale unterschiedlicher Antennenanpassungen jeweils eine zugehörige SNR-Schätzung durchgeführt werden.

Vorzugsweise kann für die SNR-Schätzung die Detektion eines Signals, z. B. desjenigen für ein bestimmtes Symbol, mehrfach zeitlich nacheinander durchgeführt und ein Vergleich der betreffenden Messwerte für mehrere nacheinander empfangene Symbole, vorzugsweise gleicher Art, durchgeführt oder eine Mittelung vorgenommen werden.

In der beispielhaften Darstellung gemäß Fig. 5 wird das Empfangsband mit einer Bandbreite von z.B. 20 kHz mittels Filter in zwei Bänder (Nutzsignal sowie Rauschen) aufgeteilt. In dem in Fig. 5 linken Bandbereich befindet sich zusätzlich das Nutzsignal, in dem rechten Bandbereich nur das Grundrauschen (Rauschfloor). In dem linken Bandbereich wird gemäß der Erfindung für unterschiedliche Antennenanpassungen Z0, Z1, Zn der Anpassnetzwerke des Impedanzanpassungsglieds 15 jeweils der Gain bzw. die Gainänderung bestimmt. In dem rechten Bandbereich wird lediglich die dadurch bedingte Erhöhung des Grundrauschens gemessen. Aus den vorliegenden Messwerten können in Abhängigkeit der unterschiedlichen Impedanzen somit unterschiedliche SNR-Verhältnisse SNR1-SNRn ermittelt werden und diejenige Antennenanpassung ausgewählt werden, die z. B. dem höchsten SNR-Verhältnis entspricht.

Bei einem Eingangssignal, auf Basis dessen die unterschiedlichen SNR-Verhältnisse SNR1-SNRn bestimmt werden können, kann es sich anstelle z.B. eines Downlinksignals einer Basisstation 10 auch um ein Uplinksignal eines weiteren Knotens im Netzwerk handeln.

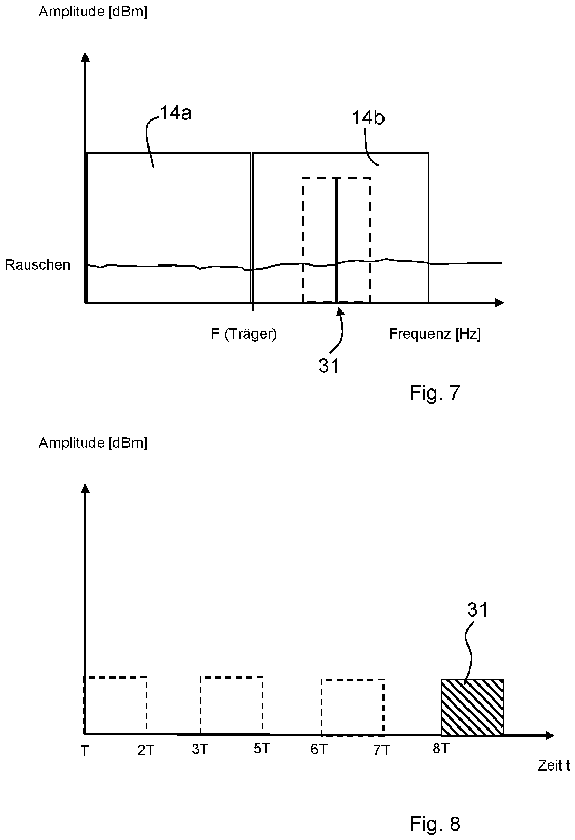

Bei der in Fig. 7 gezeigten Darstellung wird der Empfangsbereich mit zwei Filtern in zwei Frequenzkanäle 14a, 14b um die Trägerfrequenz F (Träger) aufgeteilt, wobei der eine Frequenzkanal 14a links in Fig. 7 lediglich das Rauschen sowie der andere Frequenzkanal 14a rechts in Fig. 7 eine durch das Signal für das Symbol 31 begründete Leistung enthält. Dies ermöglicht es z.B. lediglich in dem Frequenzkanal 14b zu suchen und damit das Eingangssignal z.B. zu einem Symbol 31 zur Bestimmung des jeweiligen SNR-Verhältnisses leichter aufzufinden.

Auch ist es möglich, das Empfangssignal hinsichtlich seines Zeitbereichs zu analysieren. Da man die Symboldauer bzw. Symbolsequenz (Pilotsequenz oder Synchronisationssequenz oder Trainingssequenz) kennt, kann abhängig von der jeweiligen Symbolfolge ein Ein-/Aussignal beobachtet werden, welches mit der Symboldauer schaltet, vgl. Fig. 8. Wenn das Symbol 31 bei 8T gesendet wird, ist eine Leistung vorhanden, im anderen Fall nicht. Hierbei ist eine Detektion der Leistung innerhalb der Präambel eines Datenpakets besonders vorteilhaft, da dort alternierend Symbole gesendet werden. Vorzugsweise sollte die Detektion der Leistung mehrere vorzugsweise gleiche Symbole umfassen, um die Schätzung des jeweiligen SNR-Verhältnisses über mehrere Symbole vorzugsweise gleicher Art durchführen zu können. Auch hier wird die Leistung (Signal bzw. Rauschen) jeweils bei mehreren Antennenanpassungen Z0, Z1, Zn gemessen.

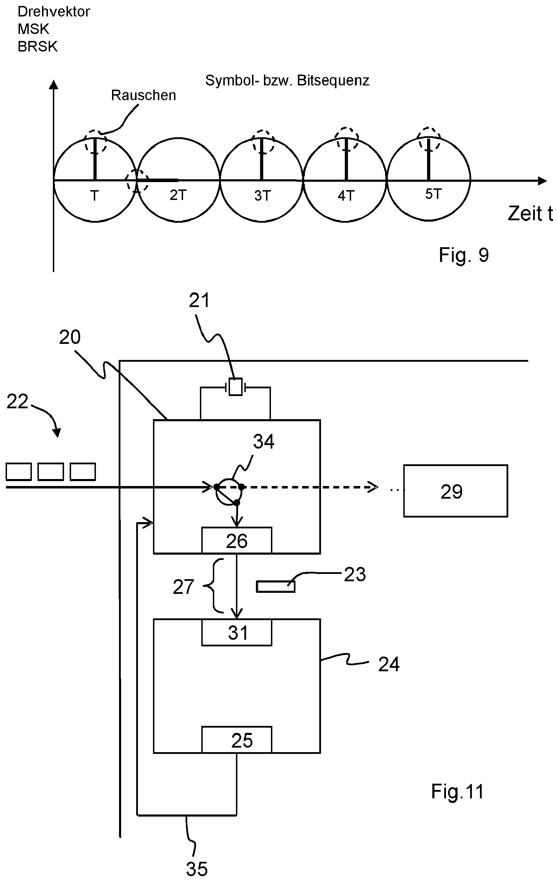

Eine Schätzung des SNR-Verhältnisses anhand digitaler Signale bzw. I/Q-Signale bei unterschiedlichen Anpassungen ist in Fig. 11 beispielhaft gezeigt. Die analogen Eingangssignale (Datenpakete 22 oder Teile von Datenpaketen) werden nach dem Eingang in der Empfangseinrichtung bzw. dem Funkchip 20 z. B. mittels eines I/Q-Verfahrens (In-Phase/Quadrature-Verfahren) in digitale Signale bzw. I/Q-Signale verarbeitet. Dies kann beispielsweise dadurch erfolgen, dass das analoge Eingangssignal in zwei Signalteile aufgeteilt wird, wobei ein Signalteil mit der originalen Phasenlage (I-Daten) und der andere Signalteil z. B. um 90° phasenverschobener Referenzfrequenz (Q-Daten) erzeugt wird. Hierbei können diese Signale bzw. Daten 23 z. B. über einen Schalter 34 aus dem Funkchip 20 abgezweigt und über eine Schnittstelle 27 einem Mikrokontroller 24 zugeführt werden, indem an den digitalen Daten 23 bzw. digitalisierten Daten eine Leistungsmessung z. B. in dem Microcontroller 24 vorgenommen werden kann. Die abgezweigten digitalen Daten 23 bzw. digitalisierten Signale werden somit nicht im Funkchip 20 oder einem nachgelagerten Dekoder 29 dekodiert, sondern dienen zur Bestimmung des jeweiligen SNR-Verhältnisses. Der Funkchip verfügt über einen Taktgeber (Quarz) 21 sowie einen digitalen Filter 26.

Mittels des Filters 26, der am Funkchip 20 oder am Mikroprozessor 24 angeordnet sein kann, können die Daten z.B. gefiltert und einer Dezimierungseinheit 33 zugeführt werden. Dort wird über einen ganzzahligen Dezimationsfaktor ein Teil der Daten ausgewählt, die schließlich für die Bestimmung des SNR-Verhältnisses herangezogen werden. Zusätzlich kann der Mikrokontroller einen Speicher 25 aufweisen. Die Mess- bzw. Schätzdaten oder daraus abgeleitete Daten oder Informationen können z.B. über einen Rückkanal 35 dem Funkchip 20 wieder zugeführt oder anderweitig bereitgestellt werden, damit eine Festlegung der entsprechenden Anpassung (Matching) vorgenommen werden kann. Die einzelnen Funktionalitäten können im Funkchip 20 selbstverständlich auch zusammengefasst sein.

Der Empfänger kann auf diese Weise bei den unterschiedlichen Anpassungen an Hand der digitalen Daten (I/Q Daten), z. B. innerhalb eines Datenpakets, jeweils den Signalpegel sowie den Rauschfloor messen und die Messwerte oder daraus abgeleiteten Werte un-tereinander vergleichen. Die Anpassung mit dem günstigsten bzw. höchsten SNR-Verhältnis kann ausgewählt werden. Diese Art der Schätzung des SNR-Verhältnisses ist deutlich schneller und dazu in seiner Bestimmung erheblich flexibler. Die nicht abgezweigten Daten werden im Dekoder 29 dekodiert.

Bei den Symbolen handelt es sich vorzugsweise um Symbole auf Basis von Frequenz- und/oder Amplitudenmodulation wie z. B. MSK-, FSK- oder QPSK-Modulation.

Eine alternative Variante der Schätzung des SNR-Verhältnisses kann auch auf Basis einer Korrelation erfolgen. Die Basisstation 10 sendet eine bekannte Symbol-, Piloten- oder Bit-Sequenz, z. B. 10111, wobei nach deren Auffinden , vgl. z. B. Fig. 9, eine SNR-Schätzung durchgeführt wird. Z.B. kann über die den einzelnen Piloten zugeordneten, gemessenen Leistungen gemittelt werden. Zudem ist der Anteil von Rauschen bekannt (vgl. Fig. 9, gestrichelter Kreis), sodass daraus das SNR-Verhältnis ermittelt werden kann.

Alternativ kann, sofern kein bekanntes Symbol vorliegt, das interessierende Symbol 31 anhand einer Frequenzschwelle detektiert werden, wobei die detektierten Symbole der gleichen Art hinsichtlich ihrer Leistung anschließend ausgewertet werden. Diese Variante erfordert etwas mehr Rechenleistung.

Gemäß einer weiteren erfindungsgemäßen Ausgestaltung wird aus mindestens zwei SNR-Werten eine Rauschzahländerung sowie Gainänderung bestimmt und daraus die Impedanz Z_Ant der Antenne abgeleitet. Das folgende Modell wird benutzt, um aus dem SNR-Verhältnis die Gain- sowie Rauschzahländerung zu bestimmen. Unter Gain wird der gesamte Gain, d.h. die gesamte Eingangsverstärkung im Empfangspfad 6 verstanden. Ebenso wird mit der Rauschzahl die gesamte Rauschzahl des Eingangspfads 6 verstanden und zwar unabhängig davon, ob die Rauschzahl von dem LNA 8 begründet ist oder durch Fehlanpassung verursacht ist. Abhängig von der Impedanz ändert sich bei einem Empfangssignal der Gain G1 sowie die dazu addierte Rauschleistung N1. Sofern eine Anpassungsschaltung fixiert ist, bleiben G1 und N konstant. Die SNR-Schätzung bestimmt sich dann wie folgt:

$$SNR_1 = \frac{SG_1}{N_1}$$

Die Summe beider Leistungen ist ebenfalls bekannt:

$$P_{ges1} = SG_1 + N_1$$

Wird nun die Impedanzanpassung Z, Z+1, Z+n des Eingangspfads verändert, ändert sich auch der Gain $G_2$ sowie die Rauschleistung $N_2$. Das SNR-Verhältnis und die Gesamtleistung bestimmen sich wie folgt:

$$SNR_2 = \frac{SG_2}{N_2}$$

$$P_{ges2} = SG_2 + N_2$$

Wenn man die beide Gesamtleistungen vergleicht:

$$\frac{P_{ges1}}{P_{ges2}} = \frac{SG_1 + N_1}{SG_2 + N_2} = \frac{N_1\left(\frac{SG_1}{N_1} + 1\right)}{N_2\left(\frac{SG_2}{N_2} + 1\right)} = \frac{N_1(SNR_1 + 1)}{N_2(SNR_2 + 1)}$$

Dadurch, dass $\frac{P_{ges1}}{P_{ges2}}$ sowie $SNR_1$ und $SNR_2$ geschätzt werden können, ist das Verhältnis zwischen $N_1$ und $N_2$ bekannt, was auch der Fall ist, wenn man die Rauschleistungen einzeln schätzt:

$$\frac{N_1}{N_2} = C_1$$

Wenn man das Verhältnis von $SNR_1$ und $SNR_2$ vergleicht, erhält man:

$$\frac{SNR_1}{SNR_2} = \frac{\frac{SG_1}{N_1}}{\frac{SG_2}{N_2}} = \frac{G_1 N_2}{G_2 N_1} = C_2$$

Alternativ kann C2 auch direkt bestimmt werden, indem man die Signalleistung für Matching 1 und Signalleistung für Matching 2 dividiert:

$$\frac{G_1}{G_2} = \frac{S_1}{S_2} = \frac{G_1 S}{G_2 S} = C_3$$

Daraus kann man das Verhältnis der beiden Gains bestimmen:

$$\frac{G_1}{G_2} = C_2 \frac{N_1}{N_2} = C_2 C_1 = C_3$$

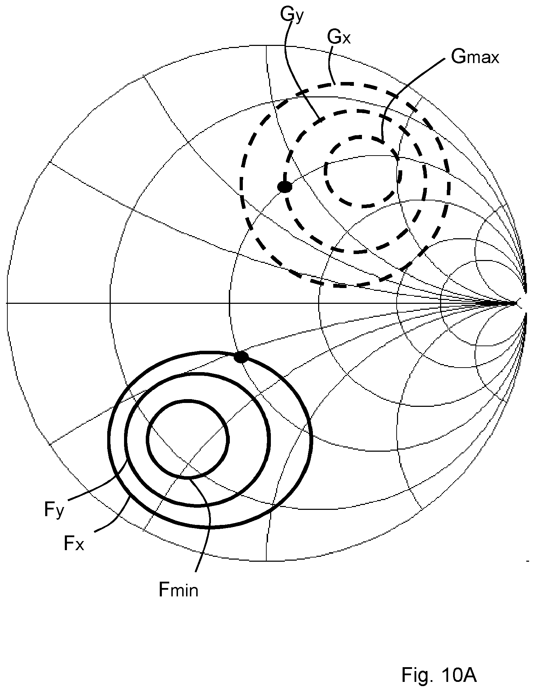

Damit kann man aus den beiden SNR-Werten und der Gesamtleistung die Änderung der Rauschzahl F und die Gain-Änderung eindeutig bestimmen, siehe Punkte auf Verbundlinie in dem Smith-Diagramm gemäß Fig. 10A.
Aus den beiden Verhältnissen kann man die Impedanz eindeutig bestimmen:

$$\frac{G(Z_2)}{G(Z_1)} = C_3$$

$$\frac{N(Z_2)}{N(Z_1)} = C_1$$

Dadurch, dass die Abhängigkeit des Gain von der Impedanz Z bekannt ist und die N Rauschleistung eine bekannte Funktion ist für die Bestimmung der Rauschzahl von der Impedanz ist hat man 2 Gleichungen und 2 unbekannten $Z_1$ und $Z_2$. Damit kann man die Unbekannten bestimmen.

Aus den $Z_1$ und $Z_2$ kann die Impedanz Z_Ant der Antenne dann eindeutig bestimmt werden. Die G Funktion und die N Funktion werden vorher über den gesamten Empfänger im Labor vermessen und auf dem µC gespeichert.

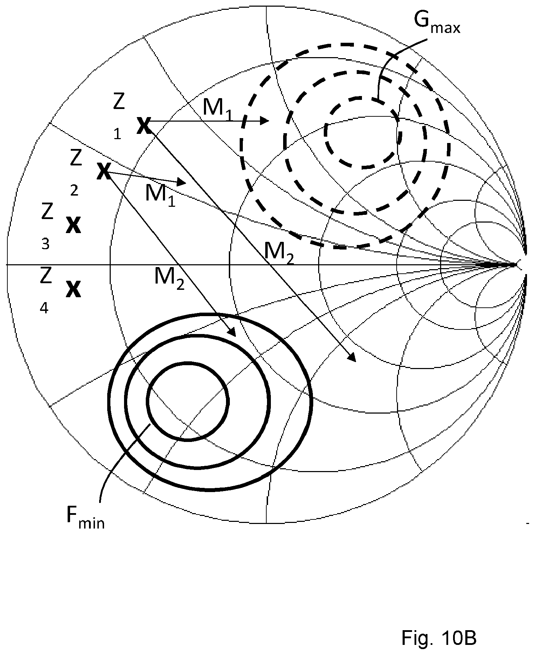

Vorzugsweise kann man mehrere Gain-Verhältnisse und mehrere Rauschzahlen-Verhältnisse bestimmen. Dadurch sind in dem Smith-Diagramm gemäß Fig. 10B mehrere Abstände bekannt, wodurch die Impedanz eindeutiger bestimmt werden kann.

Zuerst werden alle Punkte auf dem Smith-Diagramm gefunden, die die Gleichungen erfüllen. Wenn es mehrere Punkte sind, die durch Rücktransformation sinnvolle Antennenimpedanzen ergeben, werden weitere Matchings eingestellt, um noch mehr Gleichungen zu haben, oder es wird ein näherer Punkt (ein wahrscheinlicherer Punkt) ausgewählt.

Ferner kann über eine Minimierung der Abweichung zwischen gemessenem und moduliertem Gain/Rauschzahl der unbekannte (gesuchte) Antennenimpedanzbereich bestimmt werden.

Rauschzahl F und Gain G sind also deterministische Funktionen der Quellimpedanz Z des Empfängers (Empfangspfad 6). Dieser funktionale Zusammenhang kann a priori im Labor für den vorliegenden LNA vermessen werden und in geeigneter Form im Funkmodul gespeichert werden (z.B. in einer Tabelle).

Die Quellimpedanz des LNA Z_Q setzt sich zusammen aus der unbekannten Antennenimpedanz Z_Ant und dem durch das variable Antennenmatching gegegeben sweg T_Match(M1,M2,M3). Die Schaltung weist N verschiedene, auswählbare und a priori bekannte Transformationswege auf.

Für eine unbekannte Impedanz Z_Ant und einem aus den N möglichen Wegen gewählten Transformationsweg T_Match lässt sich aus den im Gerät gespeicherten Labordaten also berechnen:

Rauschzahl gemäß Modell: F_Modell (Z_Q) = F_Modell (Z_Ant, T_Match)

Gain gemäß Modell: G_Modell(Z_Q) = G_Modell (Z_Ant, T_Match)

Nun kann das Gerät für alle N möglichen Transformationswege die Gain Verhältnisse und die Rauszahlverhältnisse messen. Man erhält also zwei Vektoren mit N Elementen.

Für diese N Transformationwege lässt sich aus den obigen Modelldaten ebenfalls im Gerät ein von der unbekannten Antennenimpedanz abhängiger erwarteter Rauschboden berechnen:

Damit lässt sich mathematisch über die Minimierung der Abweichung zwischen gemessenem(r) und modellierten(r) Gain/Rauschzahl die unbekannte gesuchte Antennenimpedanz bestimmen:

$$Z_{\text{Ant,gesucht}} = \min_{Z_{\text{Ant}}} \text{AbstandModellZuMessung}$$

$$Z_{\text{Ant,gesucht}}$$
$$= \min_{Z_{\text{Ant}}}(\|\text{GainGemessen}(T_{\text{Match}}) - \text{GainModell}(Z_{\text{Ant}}, T_{\text{Match}})\|$$
$$+ \|\text{RauschzahGemessen}(T_{\text{Match}})\text{RauschzahlModell}(Z_{\text{Ant}}, T_{\text{Match}})\|\|)$$

BEZUGSZEICHENLISTE

1    Knoten
2    Funkmodul

| | |
|---|---|
| 3 | Antenne |
| 4 | Energiequelle |
| 5 | Sendepfad |
| 6 | Empfangspfad |
| 7 | PA (Power Amplifier) |
| 8 | LNA (Low Noise Amplifier) |
| 9 | TX-Modulationsglied |
| 10 | Knoten |
| 11 | Mikroprozessor |
| 12 | Rauschanpassungsglied |
| 13 | Rauschanpassungsglied |
| 14a | Frequenzkanal |
| 14b | Frequenzkanal |
| 15 | Impedanzanpassungsglied |
| 16 | Speicher |
| 17 | Sensorelement |
| 18 | Objekt |
| 19 | RF Front-End |
| 20 | Funkchip |
| 21 | Taktgeber (Quarz) |
| 22 | Datenpaket |
| 23 | I/Q-Daten |
| 24 | Mikroprozessor |
| 25 | Speicher |
| 26 | Filter |
| 27 | Schnittstelle |
| 28 | Datenzentrale |
| 29 | Empfangsfenster |
| 30 | Datenpaket |
| 31 | Bit |
| 32 | SNR-Schätzglied |
| 33 | Dezimierungseinheit |
| 34 | Schalter |
| 35 | Rückkanal |
| | |
| G | Verstärkungsfaktor (Gain) |
| F | Rauschzahl |
| M | Transformationsweg |
| N | Rauschleistung |
| Z | Impedanzpunkt |

**Patentansprüche**

1.  Verfahren zum Verbessern der Antennenanpassung bei einem funckommunikationsfähigen Knoten (1), insbesondere einer Sensor- und/oder Aktoreinrichtung, eines Kommunikationsnetzwerkes mit einem mit einer Antenne (3) ausgestatteten Funkmodul (2) mit Sende- (5) und/oder Empfangspfad (6) für auszusendende und/oder zu empfangende Funksignale und einer vorzugsweise energieautarken Energieversorgungseinrichtung (4), insbesondere Batterie, wobei die Antenne (3) eine Impedanz (Z_Ant) aufweist, **dadurch gekennzeichnet, dass**

    im Empfangsfall und/oder im Sendefall bei einstellbaren Anpassungen (Z0, Z1, Zn), vorzugsweise mittels einstellbarer Anpassnetzwerke, das jeweils Anpassung-zugehörige SNR-Verhältnis (SNRO, SNR1, SNRn) geschätzt wird und
    eine Anpassung aus den unterschiedlichen Anpassungen (Z0, Z1, Zn) für den Empfangs- und/oder den Sendebetrieb ausgewählt wird.

2.  Verfahren nach Anspruch 1, **dadurch gekennzeichnet, dass** die geschätzten SNR-Verhältnisse (SNRO, SNR1, SNRn) oder daraus abgeleitete Daten miteinander verglichen werden und

die Auswahl der Impedanzanpassung abhängig von dem Vergleich erfolgt.

3. Verfahren nach einem der vorhergehenden Ansprüche, **dadurch gekennzeichnet, dass** diejenige Impedanzanpassung (Z0, Z1 oder Zn) ausgewählt wird, bei der das geschätzte SNR-Verhältnis (SNRO, SNR1, SNRn) und/oder ein daraus abgeleiteter Wert für einen Empfangs- und/oder einen Sendebetrieb am günstigsten oder geeignetsten ist.

4. Verfahren nach einem der vorhergehenden Ansprüche, **dadurch gekennzeichnet, dass** das SNR-Verhältnis (SNRO, SNR1, SNRn) eines digitalen Empfangssignals oder eines analogen Empfangssignals geschätzt wird.

5. Verfahren nach einem der vorhergehenden Ansprüche, **dadurch gekennzeichnet, dass** es sich bei dem SNR-Verhältnis (SNRO, SNR1, SNRn) um das Signal/Rausch-Verhältnis S/N, um ein Träger/Rausch-Verhältnis C/N oder um die Rauschzahl RZ handelt und/oder
dass es sich bei dem SNR-Verhältnis (SNRO, SNR1, SNRn) um ein negatives SNR-Verhältnis handelt.

6. Verfahren nach einem der vorhergehenden Ansprüche, **dadurch gekennzeichnet, dass** die Bandbreite bei der Schätzung des SNR-Verhältnisses (SNRO, SNR1, SNRn) mit einbezogen wird.

7. Verfahren nach den vorhergehenden Ansprüchen, **dadurch gekennzeichnet, dass** eine Leistungsmessung (Signalleistung und/oder Rauschleistung) im Empfangspfad (6) nach oder am Ausgang eines Eingangsverstärkers oder LNAs (8) erfolgt.

8. Verfahren nach einem der vorhergehenden Ansprüche, **dadurch gekennzeichnet, dass** bei der Schätzung des jeweiligen SNR-Verhältnisses (SNRO, SNR1, SNRn) für ein oder mehrere Bit(s) die Energie pro Bit (Bitleistung) zur Rauschleistung oder für mindestens ein oder mehrere Symbol(e) die Energie pro Symbol (Symbolleistung) zur Rauschleistung bestimmt wird.

9. Verfahren nach einem der vorhergehenden Ansprüche, **dadurch gekennzeichnet, dass** die Empfangs-Bandbreite in einzelne Frequenzkanäle (FK1-FKn) aufgeteilt wird und in jedem Frequenzkanal eine Leistungsmessung durchgeführt wird.

10. Verfahren nach einem der vorhergehenden Ansprüche 7 bis 9, **dadurch gekennzeichnet, dass** die empfangenen Funksignale vor der Leistungsmessung mittels analogen und/oder digitalen Filtern gefiltert werden.

11. Verfahren nach einem der vorhergehenden Ansprüche, **dadurch gekennzeichnet, dass** bei einer Mehrzahl von Symbolen (31) eine Bestimmung der Leistungsanteile S und N durchgeführt wird und die Ergebnisse gemittelt oder zueinander in Relation gesetzt werden und/oder
dass gleiche Symbole (31) im Eingangssignal detektiert werden.

12. Verfahren nach einem der vorhergehenden Ansprüche, **dadurch gekennzeichnet, dass** auf Basis einer Korrelation mit einer vorbekannten Symbolsequenz des Eingangssignals festgestellt wird, ob ein Eingangssignal vorliegt oder nicht und
zur Schätzung des SNR-Verhältnisses (SNR1-SNRn) für die einzelnen Symbole (31) einer Symbolsequenz diese mit der vorbekannten Symbolsequenz abgeglichen wird.

13. Verfahren nach einem der vorhergehenden Ansprüche, **dadurch gekennzeichnet, dass** es sich bei einer Symbolsequenz um eine Synchronisations- oder Pilotsequenz oder Präambelsequenz handelt.

14. Verfahren nach einem der vorhergehenden Ansprüche, **dadurch gekennzeichnet, dass** das Eingangssignal über einen A/D-Wandler in I/Q-Daten digitalisiert wird und das SNR-Verhältnis (SNR1-SNRn) auf Basis von, vorzugsweise aus einem Hauptdatenstrom abgezweigter, I/Q-Daten geschätzt wird.

15. Verfahren nach einem der vorhergehenden Ansprüche, **dadurch gekennzeichnet, dass** die unterschiedlichen Anpassungen (Z0, Z1, Zn) innerhalb eines Datenpakets (30), vorzugsweise innerhalb eines Teils eines Datenpakets (3), insbesondere innerhalb einer Präambel oder Pilotsequenz oder Synchronisationssequenz durchlaufen werden.

16. Verfahren nach einem der vorhergehenden Ansprüche, **dadurch gekennzeichnet, dass** eine Wartezeit miteinbezogen wird, um eine Gruppenlaufzeitverzögerung bis zu der Leistungsmessung zu berücksichtigen.

**17.** Verfahren nach einem der vorhergehenden Ansprüche, **dadurch gekennzeichnet, dass** als Empfangssignal

ein insbesondere Leistungs- und/oder Sendezeit-standardisiertes Downlink-Signal oder
ein Uplink-Signal mit einer vorzugsweise vorbekannten Wellenform mindestens eines anderen Knotens oder
ein Fremd-Nutzsignal
zur Schätzung des SNR-Verhältnisses (SNR1-SNRn) verwendet wird.

**18.** Verfahren zum Verbessern der Antennenanpassung bei einem funckommunikationsfähigen Knoten (1), insbesondere einer Sensor- und/oder Aktoreinrichtung, eines Kommunikationsnetzwerkes mit einem mit einer Antenne (3) ausgestatteten Funkmodul (2) mit Sende- (5) und/oder Empfangspfad (6) und einer vorzugsweise energieautarken Energieversorgungseinrichtung (4), insbesondere Batterie, wobei die Antenne (3) eine Impedanz (Z_Ant) aufweist, insbesondere nach einem der vorhergehenden Ansprüche, **dadurch gekennzeichnet, dass** eine Abhängigkeit des Gain (G) von den Anpassungen (Z0, Z1, Zn) empirisch ermittelt und im Knoten (1) abgespeichert ist,

eine Abhängigkeit der Rauschleistung (N) von den Anpassungen (Z0, Z1, Zn) empirisch ermittelt und im Knoten (1) abgespeichert ist,
aus der durch die unterschiedlichen Anpassungen (Z0, Z1, Zn) bedingten Änderung des Gain (G) sowie der Rauschleistung (N) anhand einer Näherungsbetrachtung oder Best-Fit-Betrachtung die Impedanz der Antenne (Z_Ant) geschätzt und oder eine Anpassung (Z0 oder Z1 oder Zn) für den Betrieb des Knotens (1) ausgewählt wird.

**19.** Verfahren zum Verbessern der Antennenanpassung bei einem funckommunikationsfähigen Knoten (1), insbesondere einer Sensor- und/oder Aktoreinrichtung, eines Kommunikationsnetzwerkes mit einem mit einer Antenne (3) ausgestatteten Funkmodul (2) mit Sende (5)- und/oder Empfangspfad (6) und einer vorzugsweise energieautarken Energieversorgungseinrichtung (4), insbesondere Batterie, wobei die Antenne (3) eine Impedanz (Z_Ant) aufweist, insbesondere nach einem der vorhergehenden Ansprüche, **dadurch gekennzeichnet, dass**

der Knoten (1) bei den unterschiedlichen Anpassungen (Z0, Z1, Zn) mehrere Pakete oder Teile von Paketen aussendet,
ein Empfänger, vorzugsweise Basisstation (10), SNR-Schätzungen (SNRO, SNR1, SNRn) auf Basis der Pakete oder den Teilen von Paketen vornimmt und
der Empfänger dem Knoten (1) eine Anpassung (z. B. Z1) aus den Anpassungen (Z0, Z1, Zn) oder eine darauf basierende Information, vorzugsweise betreffend die Anpassung (z. B. Z1) mit dem höchsten SNR (z. B. SNR1), mitteilt,
wobei insbesondere vorgesehen ist, dass dem Empfänger bzw. der Basisstation (10) die unterschiedlichen Anpassungen (Z, Z1, Zn) bekannt sind.

**20.** Verfahren nach Anspruch 19, **dadurch gekennzeichnet, dass** Anpassung-zugehörige SNR-Verhältnisse (SNRO, SNR1, SNRn) mehrerer Knoten (1) oder eines Knotens (1) und der Basisstation (10) berücksichtigt werden, wobei insbesondere vorgesehen ist, dass

eine Berücksichtigung bei einem Sendefall eines Knotens (1) und bei einem Empfangsfall eines weiteren Knoten (10) erfolgt oder
eine Berücksichtigung bei einem Sendefall eines Knotens (1) und bei einem Empfangsfall der Basisstation (10) erfolgt oder
eine Berücksichtigung bei einem Sendefall der Basisstation (10) und bei einem Empfangsfall des Knotens (1) erfolgt.

**21.** Funkkommunikationsfähiger Knoten (1), insbesondere Sensor- und/ oder Aktoreinrichtung, für den Einsatz in einem Kommunikationsnetzwerk mit einem mit einer Antenne (3) ausgestattetem Funkmodul (2) mit Sende-(5) und/oder Empfangspfad (6) und einer vorzugsweise energieautarken Energieversorgungseinrichtung (4), insbesondere Batterie, sowie einem Impedanzanpassungsglied (15),
**dadurch gekennzeichnet, dass** dieser nach einem Verfahren gemäß einem der vorhergehenden Ansprüche betrieben wird.

SD

1

10

28

Fig. 1

Fig. 2

Fig. 3

Fig. 4

Nutzsignal | Rauschen

Leistung/dBm

-131 dBm +R dB/20 kHz

-131 dBm/20 kHz

-174 dBm/Hz

R dB Rauschzahl

0 dB Rauschzahl

20 kHz

Frequenz/ Hz

Fig. 5

31

Amplitude [dBm]

Frequenz [Hz]

Fig. 6A

Amplitude [dBm]

14

Rauschen

F (Träger)                    Frequenz [Hz]

31

Fig. 6B

Amplitude [dBm]

14

Rauschen

Frequenz [Hz]

31

Fig. 6C

Amplitude [dBm]

14a    14b

Rauschen

F (Träger)    Frequenz [Hz]

31

Fig. 7

Amplitude [dBm]

31

T    2T    3T    5T    6T    7T    8T

Zeit t

Fig. 8

Drehvektor
MSK
BRSK

Symbol- bzw. Bitsequenz

Rauschen

T    2T    3T    4T    5T

Zeit t

Fig. 9

21

20

22

34

29

26

27

23

31

24

25

Fig.11

35

Fig. 10A

Fig. 10B

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102016010045 A1
- DE 102016010045 A